# EUROPÄISCHE PATENTSCHRIFT

(11) **EP 0 630 746 B1**
(45) Veröffentlichungstag und Bekanntmachung des Hinweises auf die Patenterteilung: **23.07.1997**
(21) Anmeldenummer: 94109254.6
(22) Anmeldetag: 16.06.1994
(51) Int. Cl.: B32B 27/28, B32B 27/08, C08L 23/16, C08L 23/08

(54) **Tiefziehfähige Folie, Verfahren zu deren Herstellung und Verwendung derselben**
Deep-drawable film, method for its manufacture and its use
Film emboutissable, procédé pour sa fabrication et son utilisation

(30) Priorität: 21.06.1993 DE 4320474; 07.09.1993 DE 4330201
(43) Veröffentlichungstag der Anmeldung: 28.12.1994
(73) Patentinhaber: ALKOR GMBH KUNSTSTOFFE, D-81451 München (DE)
(72) Erfinder: Dous, Eberhardt, D-82237 Steinebach (DE); Mathavan, Thambirajah, D-80993 München (DE)
(74) Vertreter: Seiler, Siegfried

(56) Entgegenhaltungen:
- EP-A- 0 146 349
- EP-A- 0 329 288
- EP-A- 0 382 849
- EP-A- 0 428 851
- EP-A- 0 468 947
- EP-A- 0 552 563
- EP-A- 0 568 815
- US-A- 5 206 294
- POLYMERS FOR ADVANCED TECHNOLOGIES, Bd.2, Nr.1, Februar 1991, CHICHESTER, SUSSEX, GB, XP6171 C.S. HA, W.J. CHO, S.C. KIM 'Structure and Properties of Dynamically Cured EPDM and Ionomer Blends'

## Beschreibung

Die vorliegende Erfindung betrifft eine tiefziehfähige Folie, die (bezogen auf 100 Gew.-Teile Kunststoff der Folie) als Unterfolie 1 bis 60 Gew.-% (d) mindestens eines teilweisen vernetzten EPDM, 12 bis 30 Gew.-% (e) Propylenhomo-, -copolymerisat oder -pfropfpolymerisat mit oder ohne reaktive Gruppen, 77 bis 9,5 Gew.-% (f) mindestens eines reaktive Gruppen enthaltenden Polymeren und/oder Ionomeren auf der Basis von Ethylen und Methacrylsäure oder Acrylsäure, wobei die Säure-Gruppen teilweise Metallionen enthalten oder durch Metallionen neutralisiert sind, und 10 bis 0,5 Gew.-% (g) mindestens eines reaktive Gruppen enthaltendes polymeres Vernetzungsmittel, das zu mehr als 51 Gew.-% (bezogen auf 100 Gew.-Teile (g) Ethylen- oder andere Olefingruppen und zu 1 bis 49 Gew.-% Acrylat und/oder Methacrylatgruppen und reaktive Gruppen enthält, wobei als reaktive Gruppen Epoxyd-, Isocyanat-, Keton-, Aldehyd-, Silan-, Alkylhalogenid- und/oder Anhydridgruppen gelten sowie gegebenenfalls mindestens einen Füllstoff, Zusatz- und/oder Verarbeitungshilfsmittel besteht.

Gemäß der Erfindung ist die Folie eine tiefziehfähige Verbundfolie, die eine polyolefinhaltige Oberfolie und mindestens eine qualitätativ und/oder quantitativ von der Zusammensetzung der Oberfolie abweichenden polyolefinhaltigen Unterfolie mit den Bestandteilen (d) (e), (f), (g) als Kunststoff sowie gegebenenfalls eine Oberflächenschutzschicht enthält, wobei die Oberfolie eine bestimmte Zusammensetzung aufweist.

Die unterschiedlichsten Folien auf der Basis von Polyolefinen, insbesondere solcher auf der Basis von Polypropylen mit Polyethylen und deren Verarbeitung sind bereits bekannt.

Die Anforderungen an die Folien je nach Verwendungsgebiet sind jedoch so unterschiedlich und mit steigenden Ansprüchen verbunden, so daß ein Bedürfnis nach Folien mit verbesserten Eigenschaften und/oder verbesserten Verarbeitungsmöglichkeiten besteht.

Aus der US-B-5206294 ist bereits eine Kunststoffmischung bekannt, die teilweise vernetztes EPDM, Polypropylen, reaktive Gruppen enthaltende Polymere und Ionomere und ein raktive Gruppen enthaltendes polymeres Vernetzungsmittel enthält. Die daraus hergestellten Monofolien sind gut tiefziehfähig, erfüllen jedoch nicht andere von der Kraftfahrzeugindustrie geforderte Eigenschaften.

Im Rahmen dieser Erfindung wurden zahlreiche Versuche mit Folienrezepturen durchgeführt, bei denen unter anderem solche getestet wurden, die ein vernetztes PP-EPDM und ein unvernetztes Propylen-Block-Copolymerisat oder heterophasiges Propylen-Block-Polymerisat enthielten. Diese Folien weisen zunächst eine gute Narbstabilität auf und haben einen gewissen Mattierungsgrad bzw. eine bestimmte Mattigkeit, wie sie bei mehreren Anwendungsgebieten (z.B. Autoinnenverkleidung und dergleichen) gewünscht wird.

Die Folie dieser Zusammensetzung hat jedoch den Nachteil, daß die Narbstabilität zum Teil verloren geht. Es ergibt sich insgesamt, daß auch die Eigenschaften dieser Folie verbesserungsbedürftig sind.

Die bisher bekannten Verfahren zur Mattierung von flexiblen PP-EP- oder PP-EPDM-Zusammensetzungen mit mineralischen Füllstoffen, z.B. Talkum, bewirken eine Zunahme der Steifigkeit und eine Verschlechterung des Alterungsverhaltens. Außerdem wird der Matteffekt vom Verformungsgrad stark beeinflußt. Auch die Verwendung von elastomeren Partikeln in Gummimischungen (vergleiche u.A. EP-B-0257242) sind nicht geeignet.

Aus der EP-A-146349 ist bereits ein Laminat bekannt, das eine thermoplastische Elastomerschicht, hauptsächlich enthaltend ein Polyolefin und ein elastomeres Olefin-Copolymer, aufweist, von denen eines teilweise vernetzt ist. Weiterhin enthält das Laminat eine Schicht von einem teilweise neutralisierten Ionomerharz oder von einem 1-Olefin/(Meth)-Acrylsäurecopolymerisat, das freie Carboxylgruppen aufweist.

Das Laminat ist zur Herstellung hochglänzender Oberflächen geeignet und nicht tiefziehfähig.

Aus der EP-A-428851 sind weiterhin mehrschichtige Kunststoffdichtungsbahnen bekannt, die aus einer Oberschicht, einer Unterschicht und einem dazwischen liegenden Trägermaterial bestehen, wobei die Oberschicht und die Unterschicht das Trägermatrial derart durchdringen, daß sie miteinander verschweißt sind. Die Oberschicht und die Unterschicht sind auf der Basis wenigstens eines Copolymeren A, welches aufgebaut ist aus dem monomeren Ethylen und einem Comonomeren, ausgewählt aus der Gruppe bestehend aus Vinylestern einer C₂-C₃-Alkancarbonsäure und C₁-C₄-Alkylestern der Acrylsäure, Dabei kann das Copolymer A mit wenigstens einem Copolymeren B kombiniert werden, das aus dem monomeren Ethylen und dem comonomeren Propylen, und/oder mit wenigstens Terpolymeren, das Ethylen, Propylen und Dien enthält.

Die Folien gemäß EP-A-428851 sind schlecht tiefziehfähig und für andere Einsatzgebiete, insbesonders für Abdichtungen und Bauwerksdichtungen geeignet.

Aus der EP-A-568815 sind Folien oder Formkörper auf der Basis eines teilkristallinen Ethylen-Propylen-Dien-Terpolymer, eines Homo- und/oder Copolymeres eines Alkens und eines polymeren Modifizierungsmittels bekannt. Das teilkristalline statistische Ethylen-Propylen-Dien-Terpolymere ist zu mindestens 30 % vernetzt. Auf etwa 70 bis 30 Gew.-Teile des teilkristallinen Ethylen-Propylen-Dien-Terpolymers entfallen etwa 30 bis 70 Gew.-Teile eines Homo- und/oder Copolymers von Ethylen und/oder Propylen, wobei der thermoplastische Kunststoff mindestens etwa 5 Gew.-% eines teilkristallinen und/oder amorphen Modifizierungsmittels enthält und der gewichtsprozentuale Summenanteil des Ethylens und Propylens in dem teilkristallinen Ethylen-Propylen-Dien-Terpolymer zwischen etwa 15 und 91 Gew.-% liegt.

Obgleich die Folien oder Formkörper nach EP-A-568815 zusätzlich Schutzschichten, Haftschichten oder Schaumschichten enthalten können, weisen sie keine entsprechenden polyolefinhaltigen Verbundfolienschichten auf.

Besondere Anforderungen an Kunststoffolien werden zur Herstellung tiefziehfähiger Kraftfahrzeugfolien, -bahnen oder Kraftfahrzeugfolienschichten gestellt, da die Formteile unterschiedliche Tiefziehverhältnisse am gleichen Formteil einhalten müssen. Trotzdem soll das Formteil an allen Stellen die gleiche Prägestruktur und Mattigkeit aufweisen. Andererseits werden besondere Anforderungen an die Kratzfestigkeit der Kunststoffoberflächen, Fogwerte, die Alterungsstabilität und dergleichen gestellt.

Ziel und Aufgabe der vorliegenden Erfindung war es, gegenüber dem Stand der Technik eine verbesserte Folie mit verbesserten Eigenschaften oder Verarbeitungseigenschaften zu erzielen. Insbesondere sollte die Folie eine gute Narbstabilität aufweisen, die Oberflächen sollten ohne zusätzliche Mattierungsmittel matt sein bzw. eine gewisse Mattigkeit oder Mattierungsgrad aufweisen. Insbesondere sollte jedoch die Folie gut tiefziehfähig, prägbar und narbstabil sein und auch zu Formteilen oder Gegenständen verarbeitet werden können, an die relativ hohe Anforderungen gestellt werden.

Derartige Anwendungsgebiete sind zum Beispiel Formteile, Gegenstände oder Tiefziehteile für Kraftfahrzeuge, insbesondere Kraftfahrzeuginnenverkleidungen.

Erfindungsgemäß wurde festgestellt, daß diesen Zielen und Aufgaben eine tiefziehfähige Folie gerecht wird, die (bezogen auf 100 Gew.-Teile Kunststoff der Folie) als Unterfolie 1 bis 60 Gew.-% (d) mindestens eines teilweisen vernetzten EPDM, 12 bis 30 Gew.-% (e) Propylenhomo-, -copolymerisat oder -pfropfpolymerisat mit oder ohne reaktive Gruppen, 77 bis 9,5 Gew.-% (f) mindestens eines reaktive Gruppen enthaltenden Polymeren und/oder Ionomeren auf der Basis von Ethylen und Methacrylsäure oder Acrylsäure, wobei die Säure-Gruppen teilweise Metallionen enthalten oder durch Metallionen neutralisiert sind, und 10 bis 0,5 Gew.-% (g) mindestens eines reaktive Gruppen enthaltendes polymeres Vernetzungsmittel, das zu mehr als 51 Gew.-% (bezogen auf 100 Gew.-Teile (g)) Ethylen- oder andere Olefingruppen und zu 1 bis 49 Gew.-% Acrylat und/oder Methacrylatgruppen und reaktive Gruppen enthält, wobei als reaktive Gruppen Epoxyd-, Isocyanat-, Keton-, Aldehyd-, Silan-, Alkylhalogenid- und/oder Anhydridgruppen gelten sowie gegebenenfalls mindestens einen Füllstoff, Zusatz- und/oder Verarbeitungshilfsmittel besteht. Gemäß der Erfindung ist die Folie eine tiefziehfähige Verbundfolie, die eine polyolefinhaltige Oberfolie und mindestens eine qualitativ und/oder quantitativ von der Zusammensetzung der Oberfolie abweichenden polyolefinhaltigen Unterfolie mit den Bestandteilen (d) (e), (f), (g) als Kunststoff sowie gegebenenfalls eine Oberflächenschutzschicht enthält, wobei die Oberfolie (bezogen auf 100 Gew.-Teile Kunststoff der Oberfolie) (a) 20 bis 80 Gew.-Teile mindestens eines vernetzten PP-EPDM (Legierung oder Mischung aus Propylenhomo- und/oder -copolymerisat und vernetztem oder teilvernetztem Ethylen-Propylen-Dien-Mischpolymerisates), (b) 80 bis 20 Gew.-Teile eines unvernetzten Propylen-Block-Copolymerisates oder heterophasigen Propylen-Block-Polymerisates, mit einem Elastomeranteil im Block bzw. in der Kette von 35 bis 75 Gew.-% (bezogen auf 100 Gew.-Teile des unvernetzten heterophasigen Propylen-Block-Copolymerisates oder Propylen-Block-Polymerisates) enthält, wobei (b) zu 15 bis 1 Gew.-%, vorzugsweise 10 bis 20 Gew.-% durch die gleichen Gewichtsmengen eines reaktive Gruppen enthaltenden Polymeren und/oder Ionomeren (c) ersetzt ist, wobei (c) mindestens ein reaktive Gruppen enthaltendes Polymer und/oder Ionomer auf der Basis von Ethylen und Methacrylsäure und/oder Acrylsäure enthält und die Säure-Gruppen teilweise Metallionen enthalten oder durch Metallionen neutralisiert sind, wobei die Ober- und Unterfolie gegebenenfalls Füllstoffe, Zusatz- und/oder Verarbeitungshilfsmittel enthalten.

Obleich die Tiefziehfähigkeit der Oberfolie verbesserungsbedürftig ist und die Unterfolie auch den Anforderungen der Kraftfahrzeugindustrie nicht gerecht wird, z.B. keine gute Narbstabilität aufweist, ergibt sich in der Kombination von Ober- und Unterfolie(n) überraschenderweise bei der Verbundfolie eine sehr gute Prägbarkeit, Narbstabilität und eine sehr gute Tiefziehfähigkeit.

Die erfindungsgemäße Verbundfolie stellt eine flexible tiefziehfähige Kraftfahrzeugfolie oder -bahn dar, die für die Herstellung thermoverformter Formteile mit gleichmäßig matter Oberfläche für Kraftfahrzeugfolien für Innenverkleidungen besonders gut geeignet ist.

Die Mattigkeit dieser Folie ist weitgehend unabhängig von der Verformungstemperatur und dem Verformungsgrad, d.h. an allen Stellen des Formteils ist gleiche oder annähernd gleiche Mattigkeit der Folienoberfläche oder des daraus hergestellten thermogeformten Formteiles gegeben.

Die Oberfolie enthält dabei vorzugsweise ein dynamisch vernetztes oder teilvernetztes PP-EPDM oder PP-EPDM-Mischungen oder Legierungen. Die Bestandteile (a), (b) und (c) der Oberfolie werden gegebenenfalls in Kombination mit Verarbeitungshilfs-, Zusatzmitteln, Füllstoffen, Farbstoffen und/oder Farbpigmenten eingesetzt.

Nach einer bevorzugten Ausführungsform der Oberfolie liegt der Schmelzindex MFI (230/2,16) des dynamisch vernetzten oder teilvernetzten PP-EPDM-Gemisches (bestimmt nach DIN 53735) unter 12 g/10 min, vorzugsweise unter 8 g/10 min, besonders bevorzugt unter 6 g/10min. Nach einer vorzugsweisen Ausführungsform weist dabei einer der Bestandteile einen Schmelzindex MFI (230/2,16) von unter 4,8 g/10 min, vorzugsweise unter 2,5 g/10 min, besonders bevorzugt unter 1,8 g/10 min auf, während der andere Bestandteil des PP-EPDM-Gemisches einen höheren MFI besitzt.

Besonders bevorzugt weist dabei für die Oberfolie das in der PP-EPDM-Mischung oder dispergiert darin vorliegende Polypropylen oder der Homo- oder Copolymerisatanteil des Polypropylen einen niedrigeren Schmelzindex auf. Nach einer bevorzugten Ausführungsform hat das PP (Polypropylen) oder der dispergiert in der Mischung enthaltende Homo- oder Copolymerisatanteil (PP) einen Schmelzindex MFI (230/2,16) von 0,1 bis 2 g/10min, vorzugsweise 0,3 bis 1,5 g/10 min (Bestimmungsmethode nach DIN 53735).

Der Polypropylen-Block des unvernetzten heterophasigen Polypropylen-Blockpolymerisates besteht vorzugsweise aus einem Propylen-, -co- und/oder - blockpolymerisat. Der Elastomeranteil des heterophasigen Polypropylen-Blockcopolymerisates beträgt nach einer vorzugsweisen Ausführungsform 40 bis 70 Gew.-% (bezogen auf 100 Gew.-Teile des unvernetzten heterophasigen Propylen-Block-Copolymerisats). Nach einer anderen bevorzugten Ausführungsform beträgt jedoch der Elastomeranteil des heterophasigen Polypropylen-Block-Copolymerisates 35,5 bis 48 Gew.-%, vorzugsweise 36 bis 45 Gew.-% (bezogen auf 100 Gew.-Teil des unvernetzten heterophasigen Propylen-Block-Polymerisates).

Nach einer bevorzugten Ausführungsform besitzt das Elastomer des Ethylen-Propylen-Copolymerisates einen Ethylenanteil von 20 bis 70 Gew.-%, vorzugsweise 30 bis 60 Gew.-%, und einen Propylenanteil von 80 bis 30 Gew.-%, vorzugsweise 70 bis 40 Gew.-%, und weist ein Molekulargewicht größer als 100.000, vorzugsweise größer als 150.000 auf.

Der Zusatz eines dynamisch vernetzten PP-EPDM-Blends in der Ober- und/oder Unterfolie mit einer Teilchengröße der vernetzten Elastomerphase von 0,5 bis 15 µm verbessert den Verformungsbereich, die Gleichmäßigkeit der Wärmedehnung und das Narbbild. Ein verbessertes Narbbild bedeutet, daß die überproportionale Verdehnung der Narbtäler durch die mit zunehmender Dehnung ansteigende Festigkeit begrenzt wird (strain hardening). Um diesen Effekt zu erreichen, ist eine homogene Einarbeitung der vernetzten PP-EPDM-Blends und eine partikelförmige Elastomerstruktur notwendig. Daraus resultieren gewisse Anforderungen an den Vernetzungsgrad und den Schmelzindex der verwendeten vernetzten PP-EPDM-Blends. Der Vernetzungsgrad bei den komplexen Systemen, indirekt definiert durch den Kompressionsset bei 70 °C nach 22 Std. (DIN 53517), soll zwischen 25 und 60 liegen.

Als heterophasiges Propylen-Block-Polymerisat wird vorzugsweise ein Blockpolymerisat mit einem MFI 230/2,16 g/10 min von 0,3 bis 8, vorzugsweise 0,5 bis 7, verwendet.

Als PP-EPDM, vorzugsweise dynamisch vernetztes oder teilvernetztes PP-EPDM, werden für die Ober- und/oder Unterfolie(n) bevorzugt solche mit einer Dichte zwischen 0,78 bis 0,96 g/cm³, vorzugsweise 0,83 bis 0,93 g/cm³, angesetzt. Bevorzugt weist das PP-EPDM, das dafür ausgewählt wird, einen Biegemodul (Initial flexural modulus) - gemessen nach ASTM D 790 mit einer 2 mm dicken Folienbahn - von 80 bis 400 Mpa, vorzugsweise 100 bis 300 Mpa, auf.

Nach einer bevorzugten Ausführungsform besteht die Unterfolie oder Unterfolien (bezogen auf 100 Gew.-Teile Kunststoff der Unterfolie bzw. Unterfolien) aus (d) 5 bis 55 Gew.-% mindestens eines teilweise vernetzten EPDM, (e) 13 bis 25 Gew.-% Propylenhomo-, -copolymerisat oder -pfropfpolymerisat mit oder ohne reaktive Grupppen, (f) 73 bis 19 Gew.-% mindestens eines reaktive Gruppen enthaltenden Polymeren und/oder Ionomeren auf der Basis von Ethylen und Methacrylsäure oder Acrylsäure, wobei die Säuregruppen teilweise Metallionen enthaltem oder durch Metallionen neutralisiert sind und (g) 9 bis 1 Gew.-% mindestens eines reaktive Gruppen enthaltendes polymeres Vernetzungsmittel, das zu mehr als 51 Gew.-% (bezogen auf 100 Gew.-Teile (g)) Ethylen- oder andere Olefingruppen und zu 1 bis 49 Gew.-% Acrylat und/oder Methacrylatgruppen und reaktive Gruppen enthält, wobei als reaktive Gruppen Epoxyd-, Isocyanat-, Keton, Aldehyd-, Silan-, Alkylhalogenid- und/oder Anhydridgruppen gelten oder die Unterfolie(n) enthält diese Bestandteile.

Die erfindungsgemäßen tiefziehfähigen Verbundfolien besitzen auf der Oberfolie einen Glanzgrad nach DIN 57530/60° von 0,5 bis 5, der weder von der erforderlichen Verformungstemperatur noch von dem Tiefziehverhältnis wesentlich beeinflußt wird. Dieses Merkmal unterscheidet also di erfindungsgemäßen Folien von den nach bisherigen Erfahrungen gesammelten Erkenntnissen mit Folien, die durch Füllstoffe oder Prägung mattiert wurden.

Unter Verwendung des erfindungsgemäßen Zusatzes bzw. der erfindungsgemäßen Mischung zur Herstellung von tiefziehfähigen Kraftfahrzeugfolien gelingt es, Kunststoffolien mit einer matten Oberfläche und hoher Elastizität für die Thermoverformung zu erhalten. Dabei kann die Thermoverformung der erfindungsgemäßen Verbundfolie in einem breiten Temperaturintervall von ca. 140 bis 200 °C, vorzugsweise 150 bis 185 °C, durchgeführt werden, ohne daß besondere Schwierigkeiten auftreten. Die Folie ist ausgezeichnet tiefziehfähig und sowohl im Positivtiefziehverfahren als auch im Negativtiefziehverfahren einsetzbar. Unter Verwendung der Zusammensetzung gelingt es, Tiefziehfolien mit einer Shore-D-Härte von 25 bis 60, vorzugsweise 30 bis 55, und einen Glanzgrad nach Gardner 60 °C von 0,5 bis 1,5, gemessen am tiefgezogenen Formteil, zu erhalten.

Die erfindungsgemäßen Kraftfahrzeugverbundfolienbahnen für die Innenverkleidung haben darüberhinaus den Vorteil der hohen Alterungsstabilität gegen Licht und Wärme sowie geringe Fog-Werte.

Nach einer bevorzugten Ausführungsform weist die Ober- und/oder Unterfolie einen Füllstoffgehalt von 0 bis 30 Gewichtsanteilen, vorzugsweise 0 bis 20 Gewichtsanteilen (bezogen auf 100 Gewichtsanteile Kunststoff), auf. Als Füllstoffe können die an sich bekannten Füllstoffe, vorzugsweise Talkum und/oder Si0 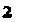 mit einer mittleren Teilchengröße von 0,01 bis 20 µm, vorzugsweise 0,05 bis 10 µm, eingesetzt werden.

Als Verarbeitungshilfsmittel werden u.a. vorzugsweise Wärme- und/oder Lichtstabilisatoren für Polyolefine eingesetzt.

Als weitere Verarbeitungshilfsmittel oder Zusatzmittel werden u.a. Gleitmittel oder Gleitmittelgemische verwendet.

Nach einer Ausführungsform ist unterhalb der Folienschicht vorzugsweise eine Haftvermittlerschicht angeordnet. Die Haftvermittlerschicht besteht vorzugsweise aus Acrylaten, Polyurethan oder Acrylat-Polyurethan-Mischungen oder enthält diese. Unterhalb der Folienschicht oder Haftvermittlerschicht ist vorzugsweise eine Schaumschicht, eine Trägerschicht, eine Gewebeschicht und/oder Stützschicht angeordnet. Die Schaumschicht enthält vorzugsweise einen Polyolefinschaum oder einen Polyurethanschaum oder besteht daraus.

Bevorzugt hat die Oberfolie eine mittlere Dicke von 60 bis 500 µm, vorzugsweise 100 bis 350 µm. Die Unterfolie oder Unterfolien besitzen eine durchschnittliche Dicke von 100 bis 2000 µm, vorzugsweise 500 bis 1500 µm, wobei die Unterfolie oder Unterfolien eine Gesamtdicke besitzen, die mehr als das 1,5-fache, vorzugsweise 2- oder Mehrfach der Oberfolie beträgt.

Die erfindungsgemäße Verbundfolie ist sehr gut thermoverformbar und dient zur Herstellung spannungsarmer Formteile mit genauer Wiedergabe oder Reproduktion von form- oder temperaturstabilen Oberflächenstrukturierungen. Die Verbundfolie wird vorzugsweise im Positivtiefziehverfahren und/oder Negativtiefziehverfahren bearbeitet bzw. verarbeitet. Der Verbundwerkstoff weist an der Unterseite oder Unterfläche vorzugsweise eine Schaumschicht, z.B. Polyurethanschaum, vorzugsweise jedoch Polyolefinschaum, auf und/oder ist mit einer Trägerschicht bzw. einem Träger und/oder einer Stützschicht und/oder einer Gitter- oder Gewebeschicht versehen. Die Folie oder Schicht wird nach einer bevorzugten Ausführungsform mit Dekorgebungen, Narbungen, Prägungen und dgl. versehen, ist narbbeständig, grifffreundlich und kann bedruckt werden. Unter Verwendung der erfindungsgemäßen Verbundfolie gelingt es Formteile oder Gegenstände herzustellen, deren Oberfläche eine gute Narbstabilität auch bei Wärmelagerung aufweisen.

Die daraus hergestellten oder tiefgezogenen Gegenstände, Formkörper, Teile und dgl., die vorzugsweise eine Schaumschicht, Trägerschicht oder einen Träger, Stützschicht und/oder eine Gitter- oder Gewebeschicht enthalten, werden bevorzugt für Schalttafeln oder Armaturenbretter für Kraftfahrzeuge, Seitenwandteile für Kraftfahrzeuge, Türverkleidungen für Kraftfahrzeuge, Dachinnenverkleidungen (Autohimmel), Innenrückwandteile für Kraftfahrzeuge (Hutablage) und andere Innenverkleidungsteile oder Gegenstände für Kraftfahrzeuge eingesetzt.

Nach einer bevorzugten Ausführungsform ist dabei die Trägerschicht und/oder Schaumschicht polyolefinhaltig oder auf der Basis von Polyolefinen.

Das reaktive Gruppen enthaltende polymere Vernetzungsmittel (g) der Unterfolie oder Unterfolien weist nach einer bevorzugten Ausführungsform neben Acrylat- und/oder Methacrylat-Gruppen bzw. Acrylsäure- und/oder Methacrylsäuregruppen und mehr als 51 Gew.-% Ethylen- und/oder Olefin- bzw. (CH 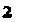 )- oder CH-Gruppen Epoxidgruppen oder epoxyähnliche Gruppen, vorzugsweise Glycidylgruppen, auf.

Die reaktive Gruppen enthaltenden Polymeren und/oder Ionomeren (g) der Unterfolie enthalten als Metallion vorzugsweise Alkali- und/oder Erdalkali-Ionen und/oder Zinkionen.

Nach einer Ausführungsform enthalten die reaktive Gruppen aufweisenden Polymeren und/oder Ionomeren (g) Alkylacrylate und/oder Alkylmethacrylate mit 1 bis 8 C-Atomen.

Nach einer bevorzugten Auisführungsform der Erfindung weist die Oberfolie eine Shore D-Härte auf oder ist darauf eingestellt, die um mehr als 3 Shore D-Einheiten, vorzugsweise 5 bis 10 Shore D-Einheiten, niedriger ist als die Shore D-Härte der Unterfolie(n) und/oder die Oberflächenspannung der Oberfolie ist auf einen Wert von größer als 40 mN/m eingestellt.

Vorzugsweise ist die Shore-D-Härte der Oberfolie unter gewichtsmäßiger Auswahl der Bestandteile der Oberfolie, vorzugsweise der Bestandteile (a), (b) und/oder (c) innrhalb der angegebenen Gewichtsmengen der Bestandteile auf eine Shore D-Härte von weniger als 37, vorzugsweise auf eine Shore D-Härte von 28 bis 35, eingestellt und/oder die Shore D-Härte der Unterfolie(n) ist unter gewichtsmäßiger Auswahl der Bestandteile der Unterfolie(n), vorzugsweise der Bestandteile (d), (e), (f) und/oder (g) innerhalb der angegebenen Gewichtsmengen auf mindestens 38 Shore D, vorzugsweise 39 bis 48 Shore D, eingestellt.

Nach einer weiteren bevorzugten Ausführungsform ist oberhalb der Oberfolie oder auf der Folienoberfläche und/oder unterhalb der Unterfolie mindestens eine polyacrylat-, polymethacrylat- und/oder polyurethanhaltige Schicht angeordnet, deren Schichtdicke geringer als die Schichtdicke der Oberfolie oder Unterfolie ist, wobei vorzugsweise die Schichtdicke der Beschichtung weniger als 50 % der Schichtdicke der Ober-und Unterfolie(n) beträgt.

Dabei sind bevorzugt die Oberfolie und gegebenenfalls Teilbereiche der Unterfolie(n) geprägt oder genarbt und die Oberfolie ist mit einer polyacrylat-, polymethacrylat-und/oder polyurethanhaltigen Schicht oder Beschichtung versehen, die 0,01 bis 18 Gew.-%, vorzugsweise 0,1 bis 12 Gew.-%, mindestens eines feinteiligen Mattierungsmittels enthält und durch Verdünnungsmittelauftrag beschichtet ist.

Die unterhalb der Unterfolie(n) angeordnete(n) polyacrylat-, polymethacrylat-und/oder polyurethanhaltigen oder (bezogen auf den Kunststoffanteil) daraus bestehende(n) Schicht(en) oder Beschichtung(en) enthalten bevorzugt mindestens ein antistatisches Mittel und/oder mindestens ein haftvermittelndes chemisches Mittel, vorzugsweise feinstteiligen Kohlenstoff oder Ruß mit einer mittleren Teilchengröße unter 100 nm, vorzugsweise zwischen 10 bis 80 nm, und/oder mindestens eine feinstteilige Kieselsäure oder ein feinstteiliges Siliziumdioxyd und/oder feinstteiliges Silikat mit einem mittleren Körnungsdurchmesser unter 4 µm, vorzugsweise unter 3 µm.

Die vorliegende Erfindung betrifft weiterhin ein Verfahren zur Herstellung der tiefziehfähigen Verbundfolie, wobei für die Herstellung der Kunststoffolie zwei oder mehrere Extruder verwendet werden, die mit einer Breitschlitzextruderdüse ausgerüstet sind.

Gemäß der Erfindung werden in mindestens einem Extruder die Bestandteile (a) bis (c) der Oberfolie und mindestens einem weiteren Extruder die Bestandteile (d) bis (g) der Unterfolie oder Unterfolien bei Temperaturen von 150 bis 280 °C, vorzugsweise 180 bis 250 °C, extrudiert, wobei zwei oder mehrere Bestandteile der Unterfolie, vorzugsweise die Bestandteile (f) und (g) unter Verwendung eines Doppelschneckenextruders bei der Extrusionstemperatur teilweise in Reaktion oder Kopplungsreaktion treten und die Verbundfolie als Coextrusionsfolie hergestellt wird.

Nach einer weiteren bevorzugten Ausführungsform des erfindungsgemäßen Verfahrens wird die Shore D-Härte der Oberfolie unter Verwendung und/oder Mitverwendung mindestens eines polyolefinhaltigen oder polyolefingruppenhaltigen Kunststoffes mit einer niedrigeren Shore D-Härte (gemessen nach DIN 53505) sowie gegebenenfalls unter Verwendung mindestens eines polyolefinhaltigen oder polyolefingruppenhaltigen Kunststoffes mit einer höheren Shore D-Härte auf einen Shore D-Wert eingestellt, der um mehr als 3 Shore D-Einheiten, vorzugsweise um 5 bis 10 Shore D-Einheiten, niedriger ist als der Shore D-Wert der darunter angeordneten Unterfolie.

Die Härte der Oberfolie wird unter gewichtsmäßiger Auswahl der Bestandteile der Oberfolie, vorzugsweise der Bestandteile (a), (b) und/oder (c) innerhalb der angegebenen Gewichtsmengen der Bestandteile auf eine Härte von weniger als 37 D-Shore, vorzugsweise 28 bis 35 D-Shore (gemessen nach DIN 53505), und/oder die Härte der Unterfolie(n) werden unter gewichtsmäßiger Auswahl der Bestandteile der Unterfolie(n), vorzugsweise der Bestandteile (d), (e), (f) und/oder (g) auf mindestsns 38 D-Shore, vorzugsweise 39 bis 46 D-Shore, eingestellt.

Nach einer bevorzugten Ausführungsform werden die Oberfolie (auf ihrer der Unterfolie abgewandten Fläche) und/oder die Unterfolie (auf ihrer der Oberfolie abgewandten Fläche) mit mindestens einer polyacrylat-, polymethacrylat- und/oder polyurethanhaltigen und Verdünnungsmittel, vorzugsweise organisch-chemische Lösemittel, enthaltenden Beschichtung unter Verwendung eines Beschichtungsmittelauftragsverfahrens, vorzugsweise unter Verwendung eines Spritz-, Sprüh-, Streich-, Rollen- oder Druckwalzenauftragsverfahrens, versehen, wobei die Beschichtung der Oberfolie 0,01 bis 18 Gew.-%, vorzugsweise 0,1 bis 12 Gew.-%, mindestens eines feinteiligen Mattierungsmittels enthält.

Bevorzugt wird für die unterhalb der Unterfolie angeordnete Schicht oder Beschichtung mindestens ein haftvermittelndes antistatisches Mittel und/oder mindestens ein haftvermittelndes chemisches Mittel, vorzugsweise feinstteiliger Kohlenstoff oder Ruß mit einer mittleren Teilchengröße unter 100 nm, vorzugsweise zwischen 10 bis 80 nm, und/oder mindestens eine feinstteilige Kieselsäure oder ein feinstteiliges Siliziumdioxyd und/oder Silikat mit einem mittleren Körnungsdurchmesser unter 4 µm, vorzugsweise unter 3 µm, verwendet,.

Die vorliegende Erfindung betrifft weiterhin die Verwendung der Verbundfolie allein oder in Kombination mit einer Schaumschicht, Trägerschicht oder einem Träger, Stützschicht, Abstandsschicht oder eine Gitter- oder Gewebeschicht zur Herstellung von Kraftfahrzeuginnenverkleidungen, vorzugsweise für Schalttafeln oder Armaturenbretter für Kraftfahrzeuge, Seitenwandteile für Kraftfahrzeuge, Türverkleidungen für Kraftfahrzeuge, Dachinnenverkleidungen (Autohimmel), Innenrückwandteile für Kraftfahrzeuge (Hutablage) und andere Innenverkleidungsteile oder Gegenstände für Kraftfahrzeuge.

| **Beispiele Oberfolie** | **1** | **2** |
|---|---|---|
| PP-Blockpolymer¹ | 80 | - |
| PP-Blockpolymer² | - | 60 |
| PP-EPDM³ | 10 | 10 |
| PP-EPDM⁴ | - | 10 |
| Ionomer⁵ | 10 | - |
| Ionomer⁶ | - | 10 |

| **Beispiele Unterfolie** | | |
|---|---|---|
| PP-Blockpolymer¹ | 30 | - |
| PP-MA⁹ | - | 30 |
| EPDM⁷ | 40 | - |
| EPDM⁸ | - | 30 |
| Ionomer⁵ | 27 | - |
| Ionomer⁶ | - | 35 |
| Ethylene glycidyl methacrylat | 3 | 5 |

| | | |
|---|---|---|
| (1) MFI = 0,8 230 °C/21,6 N | | |
| (2) MFI = 3,0 230 °C/21,6 N | | |
| (3) MFI = 5,0 230 °C/21,6 N | | |
| (4) MFI = 30,0 230 °C/21,6 N | | |
| (5) Kationtyp Zinc MFI 1,0 190 °C/21,6 N | | |
| (6) Kationtyp Zinc MFI 3,0 190 °C/21,6 N | | |
| (7) Mooney Viskosität ML 1+4 121 °C = 40 | | |
| (8) Mooney Viskosität ML 1+4 121 °C = 48 | | |
| (9) Acrylsäuregehalt 6 % | | |

### Zeichnungsbeschreibung

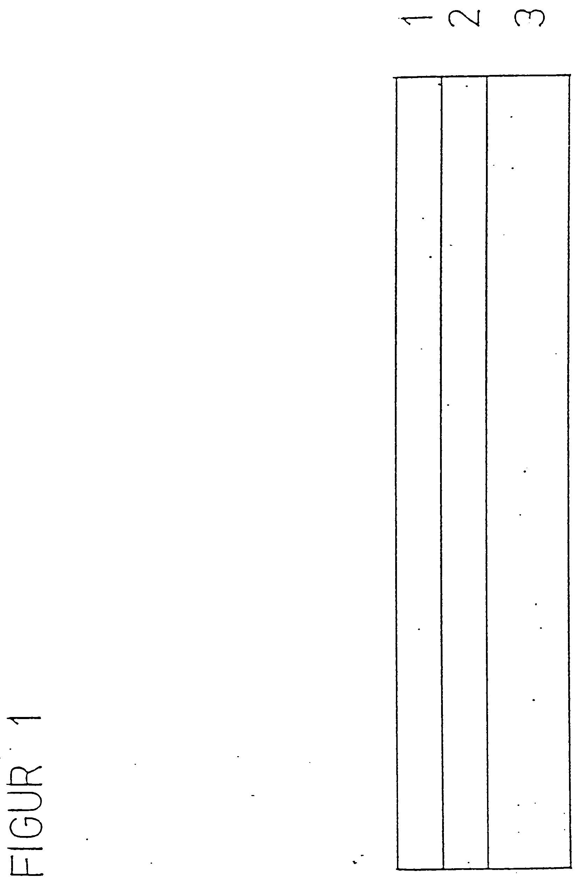

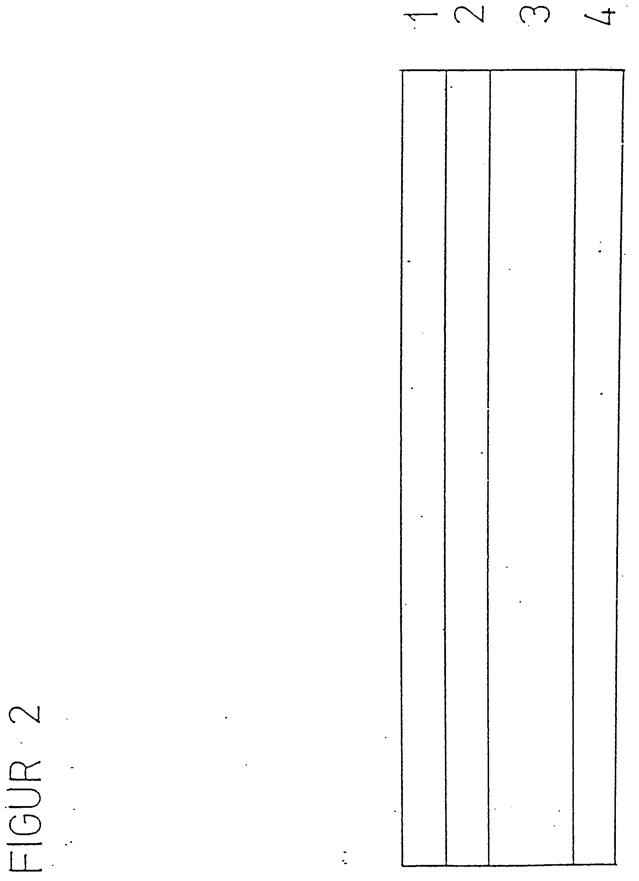

In den beigefügten Zeichnungen (Figur 1 und 2) sind schematisch einige Ausführungsbeispiele der erfindungsgemäßen Verbundfolie wiedergegeben, wobei die Dickenabmessungen nicht den eigentlichen Dicken der Schichten entsprechen (so insbesondere bei der Oberflächenschutzschicht bzw. Lackschicht, die in der Praxis zwischen 8 bis 60 µm, vorzugsweise 10 bis 50 µm, liegt).

Unter (1) ist die Lack- oder Oberflächenschicht wiedergegeben, die vorzugsweise in Form eines Verbindungs- oder Lösungsmittels wie Kunstharz für die Oberflächenbeschichtung aufgetragen wird.

Unter der Oberfolie (2) ist bzw. sind die Unterfolie(n) (3) angeordnet. In Figur 2 ist zusätzlich eine weitere Schicht (4) schematisch dargestellt, die eine Schaumschicht und/oder Trägerschicht ist.

## Patentansprüche

1. Tiefziehfähige Folie, die (bezogen auf 100 Gew.-Teile Kunststoff der Folie) als Unterfolie
1 bis 60 Gew.-% (d)
mindestens eines teilweisen vernetzten EPDM,
12 bis 30 Gew.-% (e)
Propylenhomo-, -copolymerisat oder -pfropfpolymerisat mit oder ohne reaktive Gruppen,
77 bis 9,5 Gew.-% (f)
mindestens eines reaktive Gruppen enthaltenden Polymeren und/oder Ionomeren auf der Basis von Ethylen und Methacrylsäure oder Acrylsäure, wobei die Säure-Gruppen teilweise Metallionen enthalten oder durch Metallionen neutralisiert sind und
10 bis 0,5 Gew.-% (g)
mindestens eines reaktive Gruppen enthaltendes polymeres Vernetzungsmittel, das zu mehr als 51 Gew.-% (bezogen auf 100 Gew.-Teile (g) Ethylen- oder andere Olefingruppen und zu 1 bis 49 Gew.-% Acrylat und/oder Methacrylatgruppen und reaktive Gruppen enthält, wobei als reaktive Gruppen Epoxyd-, Isocyanat-, Keton-, Aldehyd-, Silan-, Alkylhalogenid- und/oder Anhydridgruppen gelten sowie gegebenenfalls mindestens einen Füllstoff, Zusatz- und/oder Verarbeitungshilfsmittel besteht, dadurch gekennzeichnet, daß die Folie eine tiefziehfähige Verbundfolie ist, die eine polyolefinhaltige Oberfolie und mindestens eine qualitativ und quantitativ von der Zusammensetzung der Oberfolie abweichenden polyolefinhaltigen Unterfolie mit den Bestandteilen (d) (e), (f), (g) als Kunststoff sowie gegebenenfalls eine Oberflächenschutzschicht enthält, wobei die Oberfolie (bezogen auf 100 Gew.-Teile Kunststoff der Oberfolie)
a) 20 bis 80 Gew.-Teile
mindestens eines vernetzten PP-EPDM (Legierung oder Mischung aus Propylenhomo-und/oder -copolymerisat und vernetztem oder teilvernetztem Ethylen-Propylen-Dien-Mischpolymerisates)
b) 80 bis 20 Gew.-Teile
eines unvernetzten Propylen-Block-Copolymerisates oder heterophasigen Propylen-Block-Polymerisates, mit einem Elastomeranteil im Block bzw. in der Kette von 35 bis 75 Gew.-% (bezogen auf 100 Gew.-Teile des unvernetzten heterophasigen Propylen-Block-Copolymerisates oder Propylen-Block-Polymerisates) enthält, wobei (b) zu 15 bis 1 Gew.-%, vorzugsweise 10 bis 2 Gew.-% durch die gleichen Gewichtsmengen eines reaktive Gruppen enthaltenden Polymeren und/oder Ionomeren (c) ersetzt ist, wobei
(c) mindestens eine reaktive Gruppen enthaltenden Polymeren und/oder Ionomeren auf der Basis von Ethylen und Methacrylsäure und/oder Acrylsäure, wobei die Säure-Gruppen teilweise Metallionen enthalten oder durch Metallionen neutralisiert sind, wobei die Ober- und Unterfolie gegebenenfalls Füllstoffe, Zusatz-und/oder Verarbeitungshilfsmittel enthalten.

2. Tiefziehfähige Verbundfolie nach Anspruch 1, dadurch gekennzeichnet, daß in der Oberfolie der Polypropylen-Block des unvernetzten heterophasigen Polypropylen-Blockpolymerisates aus einem Propylenhomo-, -co- und/oder -blockpolymerisat besteht und der Elastomeranteil des heterophasigen Polypropylen-Blockcopolymerisats 40 bis 70 Gew.-% (bezogen auf 100 Gew.-Teile des unvernetzten heterophasigen Propylen-Blockcopolymerisates) beträgt.

3. Tiefziehfähige Verbundfolie nach Ansprüchen 1 und 2, dadurch gekennzeichnet, daß das Elastomer des Ethylen-Propylen-Copolymerisates, einen Ethylenanteil von
20 bis 70 Gew.-%, vorzugsweise
30 bis 60 Gew.-%,
und einen Propylenanteil von
80 bis 30 Gew.-%, vorzugsweise
70 bis 40 Gew.-%,
aufweist und ein Molekulargewicht größer als 100.000 besitzt.

4. Tiefziehfähige Verbundfolie nach einem oder mehreren der Ansprüche 1 bis 3, dadurch gekennzeichnt, daß das heterophasige Propylen-Blockpolymerisat einen MFI 230/2,16 g/10 min
0,3 bis 8, vorzugsweise
0,5 bis 7,
besitzt.

5. Tiefziehfähige Verbundfolie nach einem oder mehreren der Ansprüche 1 bis 4, dadurch gekennzeichnet, daß als PP-EPDM dynamisch vernetztes oder teilvernetztes PP-EPDM mit einer Dichte zwischen 0,78 bis 0,96 g/cm³ in der Ober- und/oder Unterfolie enthalten sind und/oder die Unterfolie oder Unterfolien (bezogen auf 100 Gew.-Teile Kunststoff der Unterfolie bzw. Unterfolien) aus
d) 5 bis 55 Gew.-%
mindestens eines teilweise vernetzten EPDM
e) 13 bis 25 Gew.-%
Propylenhomo-, -copolymerisat oder -pfropfpolymerisat mit oder ohne reaktive Gruppen
f) 73 bis 19 Gew.-%
mindestens eines reaktive Gruppen enthaltenden Polymeren und/oder Ionomeren auf der Basis von Ethylen und Methacrylsäure oder Acrylsäure, wobei die Säuregruppen teilweise Metallionen enthalten oder durch Metallionen neutralisiert sind und
g) 9 bis 1 Gew.-%
mindestens eines reaktive Gruppen enthaltendes polymeres Vernetzungsmittel, das zu mehr als 51 Gew.-% (bezogen auf 100 Gew.-Teile (g) Ethylen- oder andere Olefingruppen und zu 1 bis 49 Gew.-% Acrylat und/oder Methacrylatgruppen und reaktive Gruppen enthält, wobei als reaktive Gruppen Epoxyd-, Isocyanat-, Keton-, Aldehyd-, Silan-, Alkylhalogenid- und/oder Anhydridgruppen gelten.

6. Tiefziehfähige Verbundfolie nach einem oder mehreren der Ansprüche 1 bis 5, dadurch gekennzeichnet, daß das PP-EPDM für die Unter- und/oder Oberfolie einen Biegemodul (Initial flexural modulus) - gemessen nach ASTM D 790 mit einer 2 mm dicken Folienbahn - von 80 bis 400 Mpa, vorzugsweise 100 bis 300 MPA, aufweist.

7. Tiefziehfähige Verbundfolie nach einem oder mehreren der Ansprüche 1 bis 6, dadurch gekennzeichnet, daß das reaktive Gruppen enthaltende polymere Vernetzungsmittel (g) der Unterfolie oder Unterfolien neben Acrylat- und/oder Methacrylat-Gruppen bzw. Acrylsäure- und/oder Methacrylsäuregruppen und mehr als 51 Gew.-% Ethylen- oder Olefin- bzw. (CH 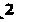 )- oder CH-Gruppen Epoxidgruppen, vorzugsweise Glycidylgruppen, aufweist.

8. Tiefziehfähige Verbundfolie nach einem oder mehreren der Ansprüche 1 bis 7, dadurch gekennzeichnet, daß die reaktive Gruppen enthaltenden Polymeren und/oder Ionomeren (g) der Unterfolie als Metallion Alkali- und/oder Erdalkali-Ionen und/oder Zinkionen enthalten.

9. Tiefziehfähige Verbundfolie nach einem oder mehreren der Ansprüche 1 bis 8, dadurch gekennzeichnet, daß die reaktive Gruppen enthaltenden Polymeren und/oder Ionomeren (g) Alkylacrylate und/oder Alkylmethacrylate mit 1 bis 8 C-Atomen enthalten.

10. Tiefziehfähige Verbundfolie nach einem oder mehreren der Ansprüche 1 bis 9, dadurch gekennzeichnet, daß die Oberfolie eine durchschnittliche Dicke von
60 bis 500 µm
und die Unterfolie oder Unterfolien eine durchschnittliche Gesamtdicke von
100 bis 2500 µ
aufweisen, wobei die Dicke der Unterfolie oder Unterfolien mehr als das 1,5-fache der Oberfolie beträgt.

11. Tiefziehfähige Verbundfolie nach einem oder mehreren der Ansprüche 1 bis 10, dadurch gekennzeichnet, daß die Oberfolie eine Shore D-Härte aufweist (oder darauf eingestellt ist), die um mehr als 3 Shore D-Einheiten niedriger ist als die Shore D-Härte der Unterfolie(n) und/oder daß die Oberflächenspannung der Oberfolie auf einen Wert von größer als 40 mN/m eingestellt ist.

12. Tiefziehfähige Verbundfolie nach einem oder mehreren der Ansprüche 1 bis 11, dadurch gekennzeichnet, daß die Shore D-Härte der Oberfolie unter gewichtsmäßiger Auswahl der Bestandteile der Oberfolie, vorzugsweise der Bestandteile (a), (b) und/oder (c), innerhalb der angegebenen Gewichtsmengen der Bestandteile auf eine Shore D-Härte von weniger als 37 eingestellt ist und die Shore D-Härte der Unterfolie(n) unter gewichtsmäßiger Auswahl der Bestandteile der Unterfolie(n), vorzugsweise der Bestandteile (d), (e), (f) und/oder (g) innerhalb der angegebenen Gewichtsmengen auf mindestens 38 Shore D eingestellt sind.

13. Tiefziehfähige Verbundfolie nach einem oder mehreren der Ansprüche 1 bis 12, dadurch gekennzeichnet, daß oberhalb der Oberfolie oder auf der Folienoberfläche und/oder unterhalb der Unterfolie mindestens eine polyacrylat-, polymethacrylat-und/oder polyurethanhaltige Schicht angeordnet ist, deren Schichtdicke geringer als die Schichtdicke der Oberfolie oder Unterfolie ist, wobei vorzugsweise die Schichtdicke der Beschichtung weniger als 50 % der Schichtdicke der Ober-oder Unterfolie(n) beträgt.

14. Tiefziehfähige Verbundfolie nach einem oder mehreren der Ansprüche 1 bis 13, dadurch gekennzeichnet, daß die Oberfolie und gegebenenfalls Teilbereiche der Unterfolie(n) geprägt oder genarbt und mit einer polyacrylat-, polymethacrylat-und/oder polyurethanhaltigen Schicht oder Beschichtung versehen ist, die 0,01 bis 18 Gew.-% mindestens eines feinteiligen Mattierungsmittels enthält und durch Verdünnungsmittelauftrag beschichtet ist.

15. Tiefziehfähige Verbundfolie nach einem oder mehreren der Ansprüche 1 bis 14, dadurch gekennzeichnet, daß die unterhalb der Unterfolie(n) angeordnete(n) polyacrylat-, polymethacrylat- und/oder polyurethanhaltigen oder (bezogen auf den Kunststoffanteil) daraus bestehende(n) Schicht(en) oder Beschichtung(en) mindestens ein antistatisches Mittel und/oder mindestens ein haftvermittelndes chemisches Mittel, vorzugsweise feinstteiligen Kohlenstoff oder Ruß mit mittlerer Teilchengröße unter 100 nm und/oder mindestens eine feinstteilige Kieselsäure oder ein feinstteiliges Siliziumdioxyd und/oder feinstteiliges Silikat mit einem mittleren Körnungsdurchmesser unter 4 µm enthält bzw. enthalten.

16. Verfahren zur Herstellung der tiefziehfähigen Verbundfolie nach einem oder mehreren der Ansprüche 1 bis 15, wobei für die Herstellung der Kunststoffolie zwei oder mehrere Extruder verwendet werden, die mit einer Breitschlitzextruderdüse ausgerüstet sind, dadurch gekennzeichnet, daß in mindestens einem Extruder die Bestandteile (a) bis (c) der Oberfolie und mindestens einem weiteren Extruder die Bestandteile (d) bis (g) der Unterfolie oder Unterfolien bei Temperaturen von 150 bis 280 °C extrudiert werden und zwei oder mehrere Bestandteile der Unterfolie unter Verwendung eines Doppelschneckenextruders bei der Extrusionstemperatur teilweise in Reaktion oder Kopplungsreaktion treten und die Verbundfolie als Coextrusionsfolie hergestellt wird.

17. Verfahren nach Anspruch 16, dadurch gekennzeichnet, daß die Shore D-Härte der Oberfolie unter Verwendung und/oder Mitverwendung mindestens eines polyolefinhaltigen oder polyolefingruppenhaltigen Kunststoffes mit einer niedrigeren Shore D-Härte (gemessen nach DIN 53505) sowie gegebenenfalls unter Verwendung mindestens eines polyolefinhaltigen oder polyolefingruppenhaltigen Kunststoffes mit einer höheren Shore D-Härte auf einen Shore D-Wert eingestellt wird, der um mehr als 3 Shore D-Einheiten, vorzugsweise um 5 bis 10 Shore D-Einheiten, niedriger ist als der Shore D-Wert der darunter angeordneten Unterfolie.

18. Verfahren nach Ansprüchen 16 und 17, dadurch gekennzeichnet, daß die Härte der Oberfolie unter gewichtsmäßiger Auswahl der Bestandteile der Oberfolie, vorzugsweise der Bestandteile (a), (b) und/oder (c) innerhalb der angegebenen Gewichtsmengen der Bestandteile auf eine Härte von weniger als 37 D-Shore, vorzugsweise 28 bis 35 D-Shore (gemessen nach DIN 53505), eingestellt wird und/oder die Härte der Unterfolie(n) werden unter gewichtsmäßiger Auswahl der Bestandteile der Unterfolie(n), vorzugsweise der Bestandteile (d), (e), (f) und/oder (g), mindestens 38-Dhore, vorzugsweise 39 bis 46 D-Shore, eingestellt.

19. Verfahren nach einem oder mehreren der Ansprüche 16 bis 18, dadurch gekennzeichnet, daß die Oberfolie (auf ihrer der Unterfolie abgewandten Fläche) und/oder die Unterfolie (auf ihrer der Oberfolie abgewandten Fläche) mit mindestens einer polyacrylat-, polymethacrylat- und/oder polyurethanhaltigen Schicht und Verdünnungsmittel, vorzugsweise organisch-chemische Lösemittel, enthaltenden Beschichtung unter Verwendung eines Beschichtungsmittelauftragsverfahrens, vorzugsweise unter Verwendung eines Spritz-, Sprüh-, Streich-, Rollen-oder Druckwalzenauftragsverfahrens, versehen werden, wobei die Beschichtung der Oberfolie 0,01 bis 18 Gew.-%, vorzugsweise 0,1 bis 12 Gew.-%, mindestens eines feinteiligen Mattierungsmittels enthält.

20. Verfahren nach einem oder mehreren der Ansprüche 16 bis 19, dadurch gekennzeichnet, daß für die unterhalb der Unterfolie angeordnete Schicht oder Beschichtung mindestens ein antistatisches Mittel und/oder mindestens ein haftvermittelndes chemisches Mittel, vorzugsweise feinstteiliger Kohlenstoff oder Ruß mit einer mittleren Teilchengröße unter 100 nm, vorzugsweise zwischen 10 bis 80 nm, und/oder mindestens eine feinstteilige Kieselsäure oder ein feinstteiliges Siliziumdioxyd und/oder Silikat mit einem mittleren Körnungsdurchmesser unter 4 µm, vorzugsweise unter 3 µm, verwendet wird.

21. Verwendung der Verbundfolie nach einem oder mehreren der Ansprüche 1 bis 16 allein oder in Kombination mit einer Schaumschicht, Trägerschicht oder einem Träger, Stützschicht, Abstandsschicht oder einer Gitter- oder Gewebeschicht zur Herstellung von Kraftfahrzeuginnenverkleidungen, vorzugsweise für Schalttafeln oder Armaturenbretter für Kraftfahrzeuge, Seitenwandteile für Kraftfahrzeuge, Türverkleidungen für Kraftfahrzeuge, Dachinnenverkleidungen (Autohimmel), Innenrückwandteile für Kraftfahrzeuge (Hutablage) und andere Innenverkleidungsteile oder Gegenstände für Kraftfahrzeuge.

## Claims

1. A foil, capable of being deep-drawn, which (in relation to 100 parts by weight plastic of the foil) as lower foil consists of
1 to 60 % by weight (d)
at least of one partially cross-linked EPDM,
12 to 30% by weight (e)
propylene homo-, -copolymeride or -graft polymeride with or without reactive groups,
77 to 9,5 % by weight (f)
at least of one polymer and/or ionomer containing reactive groups based on ethylene and methacrylic acid or acrylic acid, in which the acid groups contain partially metal ions or are neutralised by metal ions and
10 to 0.5 % by weight (g)
at least of one polymeric cross-linking agent containing reactive groups, which contains at more than 51 % by weight (in relation to 100 parts by weight) (g) ethylene- or other olefin groups and at 1 to 49% by weight acrylate and/or methacrylate groups and reactive groups, in which epoxide-, isocyanate-, ketone-, alkdehyde, silane-, alkylhalide- and/or anhydride groups apply as reactive groups and also if necessary at least one filler, additive and/or processing adjuvant, characterised in that the foil is a composite foil capable of being deep-drawn, which contains an upper foil, containing polyolefin, and at least one lower foil, differing qualitatively and quantitatively from the composition of the upper foil, with the components (d), (e), (f), (g) as plastic and also if necessary contains a surface protection layer, in which the upper foil (in relation to 100 parts by weight plastic of the upper foil) contains
a) 20 to 80 parts by weight
at least of one cross-linked PP-EPDM (combination or mixture of propylene homo- and/or -copolymeride and cross-linked or partially cross-linked ethylene propylene diene mixed polymeride)
b) 80 to 20 parts by weight
of a non-crosslinked propylene block copolymeride or heterophasic propylene block polymeride, with an elastomer component in the block or in the chain of 35 to 75 % by weight (in relation to 100 parts by weight of the non-crosslinked heterophasic propylene block copolymeride or propylene block polymeride), in which (b) is replaced at 15 to 1 % by weight, preferably 10 to 2 % by weight by the same quantities of weight of a polymer and/or ionomer (c) containing reactive groups in which
(c) at least one polymer and/or ionomer containing reactive groups based on ethylene and methacrylic acid and/or acrylic acid, in which the acid groups contain partially metal ions or are neutralised by metal ions, in which the upper-and lower foil contain if necessary fillers, additives and/or processing adjuvants.

2. A composite foil, capable of being deep-drawn, according to Claim 1, characterised in that in the upper foil the polypropylene block of the non-crosslinked heterophasic polypropylene block polymeride consists of a propylene homo-, -co- and/or block polymeride and the elastomer component of the heterophasic polypropylene block copolymeride amounts to 40 to 70% by weight (in relation to 100 parts by weight of the non-crosslinked heterophasic propylene block copolymeride).

3. A composite foil, capable of being deep-drawn, according to Claims 1 and 2, characterised in that the elastomer of the ethylene/propylene copolymeride has an ethylene component of
20 to 70 % by weight, preferably
30 to 60 % by weight,
and a propylene component of
80 to 30 % by weight, preferably
70 to 40 % by weight,
and has a molecular weight greater than 100,000.

4. A composite foil, capable of being deep-drawn, according to one or more of Claims 1 to 3, characterised in that the heterophasic propylene block polymeride has a MFI 230/2.16g/10 min
0.3 to 8, preferably
0.5 to 7.

5. A composite foil capable of being deep-drawn, according to one or more of Claims 1 to 4, characterised in that as PP-EPDM dynamically cross-linked or partially cross-linked PP-EPDM with a density between 0.78 to 0.96 g/cm³ are contained in the upper and/or lower foil and/or the lower foil or lower foils (in relation to 100 parts by weight plastic of the lower foil or lower foils) consist of
d) 5 to 55 % by weight
at least of one partially cross-linked EPDM
e) 13 to 25 % by weight
propylene homo-, -copolymeride or -graft polymeride with or without reactive groups
f) 73 to 19 % by weight
at least of one polymer and/or ionomer containing reactive groups, based on ethylene and methacrylic acid or acrylic acid, in which the acid groups partially contain metal ions or are neutralised by metal ions and
g) 9 to 1 % by weight
at least of one polymeric cross-linking agent containing reactive groups, which contains at more than 51 % by weight (in relation to 100 parts by weight) (g) ethylene- or other olefin groups and at 1 to 49 % by weight acrylate and/or methacrylate groups and reactive groups, in which epoxide-, isocyanate-, ketone-, aldehyde-, silane-, alkylhalide- and/or anhydride groups apply as reactive groups.

6. A composite foil, capable of being deep-drawn, according to one or more of Claims 1 to 5, characterised in that the PP-EPDM for the lower and/or upper foil has a bending modulus (initial flexural modulus) - measured in accordance with ASTM D 790 with a 2mm thick foil web - of 80 to 400 Mpa, preferably 100 to 300 Mpa.

7. A composite foil, capable of being deep-drawn, according to one or more of Claims 1 to 6, characterised in that the polymeric cross-linking agent (g), containing reactive groups, of the lower foil or lower foils has in addition to acrylate- and/or methacrylate groups or acrylic acid- and/or methacrylic acid groups and more than 51 % by weight ethylene- or olefin- or (CH₂)- or CH groups epoxide groups, preferably glycidyl groups.

8. A composite foil, capable of being deep-drawn, according to one or more of Claims 1 to 7, characterised in that the polymers and/or ionomers (g), containing reactive groups, of the lower foil contain as metal ions alkali-and/or alkaline earth ions and/or zinc ions.

9. A composite foil, capable of being deep-drawn, according to one or more of Claims 1 to 8, characterised in that the polymers and/or ionomers (g), containing reactive groups, contain alkylacrylates and/or alkylmethacrylates with 1 to 8 C atoms.

10. A composite foil, capable of being deep-drawn, according to one or more of Claims 1 to 9, characterised in that the upper foil has an average thickness of
60 to 500 µm
and the lower foil or lower foils have an average overall thickness of
100 to 2500 µ
in which the thickness of the lower foil or lower foils amounts to more than 1.5 times the upper foil.

11. A composite foil, capable of being deep-drawn, according to one or more of Claims 1 to 10, characterised in that the upper foil has a Shore D hardness (or is set thereto), which is lower by more than 3 Shore D units than the Shore D hardness of the lower foil(s) and/or that the surface tension of the upper foil is set to a value of greater than 40 mN/m.

12. A composite foil, capable of being deep-drawn, according to one or more of Claims 1 to 11, characterised in that the Shore D hardness of the upper foil, with a choice according to weight of the components of the upper foil, preferably of the components (a), (b) and/or (c), within the indicated weight quantities of the components is set to a Shore D hardness of less than 37 and the Shore D hardness of the lower foil(s) with a choice according to weight of the components of the lower foil(s), preferably of the components (d), (e), (f) and/or (g) within the indicated weight quantities are set to at least 38 Shore D.

13. A composite foil, capable of being deep-drawn, according to one or more of Claims 1 to 12, characterised in that above the upper foil or on the foil surface and/or beneath the lower foil at least one layer is arranged containing polyacrylate, polymethacrylate and/or polyurethane, the layer thickness of which is smaller than the layer thickness of the upper foil or lower foil, in which preferably the layer thickness of the coating amounts to less than 50% of the layer thickness of the upper or lower foil(s).

14. A composite foil capable of being deep-drawn according to one or more of Claims 1 to 13, characterised in that the upper foil and possibly partial regions of the lower foil(s) are embossed or grained and provided with a layer or coating containing polyacrylate, polymethacrylate and/or polyurethane, which contains 0.01 to 18 % by weight at least of one fine-particulate delustering agent and is coated by the application of thinning agent.

15. A composite foil, capable of being deep-drawn, according to one or more of Claims 1 to 14, characterised in that the layer(s) or coating(s) arranged beneath the lower foil(s) and containing polyacrylate, polymethacrylate and/or polyurethane or (in relation to the plastic component) consisting thereof, contains or contain at least one antistatic agent and/or at least one adhesion-inducing chemical agent, preferably superfine carbon or soot with an average particle size below 100 nm and/or at least one superfine silica or a superfine silicic acid and/or superfine silicate with an average grain diameter below 4 µm.

16. A method for the manufacture of the composite foil, capable of being deep-drawn, according to one or more of Claims 1 to 15, in which for the manufacture of the plastic foil two or more extruders are used, which are equipped with a wide slot extruder nozzle, characterised in that in at least one extruder the components (a) to (c) of the upper foil and in at least one further extruder the components (d) to (g) of the lower foil or lower foils are extruded at temperatures of 150 to 280°C and two or more components of the lower foil, using a double worm extruder at the extrusion temperature partially enter into reaction or coupling reaction and the composite foil is produced as a coextrusion foil.

17. A method according to Claim 16, characterised in that the Shore D hardness of the upper foil with the use and/or co-use at least of one plastic containing polyolefin or polyolefin groups with a lower Shore D hardness (measured in accordance with DIN 53505) and also possibly with the use at least of one plastic containing polyolefin or polyolefin groups with a higher Shore D hardness is set to a Shore D value which is lower by more than 3 Shore D units, preferably by 5 to 10 Shore D units, than the Shore D value of the lower foil arranged therebeneath.

18. A method according to Claims 16 and 17, characterised in that the hardness of the upper foil with a choice, according to weight, of the components of the upper foil, preferably of the components (a), (b) and/or (c) within the indicated weight quantities of the components is set to a hardness of less than 37 D Shore, preferably 28 to 35 D Shore (measured in accordance with DIN 53505) and/or the hardness of the lower foil(s) with a choice, according to weight, of the components of the lower foil(s), preferably of the components (d), (e), (f) and/or (g), to at least 38 D Shore, preferably 39 to 46 D Shore.

19. A method according to one or more of Claims 16 to 18, characterised in that the upper foil (on its surface facing away from the lower foil) and/or the lower foil (on its surface facing away from the upper foil) is provided with at least one layer containing polyacrylate, polymethacrylate and/or polyurethane and coating containing thinning agent, preferably organo-chemical solvent, using a coating medium application method, preferably using an injection, spray, paint, roller or pressure roller application method, in which the coating of the upper foil contains 0,01 to 18 % by weight preferably 0.1 to 12 % by weight at least of one fine-particulate delustering agent.

20. A method according to one or more of Claims 16 to 19, characterised in that for the layer or coating arranged beneath the lower foil at least one antistatic agent and/or at least one adhesion-inducing chemical agent is used, preferably superfine carbon or soot with an average particle size below 100 nm, preferbly between 10 to 80 nm, and/or at least one superfine silica or a superfine silicic acid and/or silicate with an average grain diameter below 4 µm, preferably below 3 µm.

21. The use of the composite foil according to one or more of Claims 1 to 16 alone or in combination with a foam layer, carrier layer or with a carrier, supporting layer, spacer layer or a mesh- or fabric layer for the production of interior panelling for motor vehicles, preferably for switch panels or dashboards for motor vehicles, side wall pieces for motor vehicles, door linings for motor vehicles, interior roof panelling (car ceiling), interior rear wall pieces for motor vehicles (hat shelf) and other interior panelling pieces or objects for motor vehicles.

## Revendications

1. Film emboutissable, qui contient (par rapport à 100 parts en poids de matière synthétique du film) à titre de film inférieur
1 à 60 % en poids (d)
d'au moins un EPDM partiellement réticulé,
12 à 30% en poids (e)
d'un nomopolymère, copolymère ou polymère greffé de propylène avec ou sans groupes réactionnels,
77 à 9,5 % en poids (f)
d'au moins un polymère et/ou ionomère contenant des groupes réactionnels, à base d'éthylène et d'acide méthacrylique ou d'acide acrylique, les groupes acides contenant partiellement des ions métalliques ou étant neutralisés par des ions métalliques, et
10 à 0,5 % en poids (g)
d'au moins un agent de réticulation polymère contenant des groupes réactionnels, agent qui contient plus de 51 % en poids (par rapport à 100 parts en poids de (g)) de groupes d'éthylène ou d'autres groupes oléfiniques et 1 à 49 % en poids de groupes d'acrylate et/ou de méthacrylate et de groupes réactionnels, où sont considérés à titre de groupes réactionnels les groupes d'époxydes, d'isocyanates, de cétones, d'aldéhydes, de silanes, d'halogénures d'alkyle et/ou d'anhydrides, de même qu'éventuellement au moins une matière de charge, un additif et/ou un adjuvant de mise en oeuvre, caractérisé en ce que le film est un film composite emboutissable, qui contient un film supérieur contenant des polyoléfines et au moins un film inférieur contenant des polyoléfines, différant qualitativement et quantitativement de la composition du film supérieur, avec les constituants (d), (e), (f), (g) à titre de matière synthétique, de même qu'éventuellement une couche de protection superficielle, le film supérieur contenant (par rapport à 100 parts en poids de matière synthétique du film supérieur)
a) 20 à 80 parts en poids
d'au moins un PP-EPDM réticulé (alliage ou mélange d'un homopolymère et/ou copolymère de propylène et d'un copolymère d'éthylène-propylène-diène réticulé ou partiellement réticulé)
b) 80 à 20 parts en poids
d'un copolymère séquencé non-réticulé de propylène ou d'un polymère séquencé hétérophasique de propylène, avec une teneur en élastomère dans la séquence, respectivement dans la chaîne, de 35 à 75 % en poids (par rapport à 100 parts en poids du copolymère séquencé de propylène ou du polymère séquencé de propylène, non-réticulé et hétérophasique), (b) étant remplacé à 15 à 1 % en poids, de préférence à 10 à 2 % en poids par des quantités pondérales identiques d'un polymère et/ou ionomère (c) contenant des groupes réactionnels, où
(c) est au moins un polymère et/ou ionomère contenant des groupes réactionnels, à base d'éthylène et d'acide méthacrylique et/ou d'acide acrylique, les groupes acides contenant partiellement des ions métalliques ou étant neutralisés par des ions métalliques, le film supérieur et inférieur contenant éventuellement des matières de charge, des additifs et/ou des adjuvants de mise en oeuvre.

2. Film composite emboutissable selon la revendication 1, caractérisé en ce que, dans le film supérieur, la séquence de polypropylène du polymère séquencé hétérophasique non-réticulé de polypropylène est constituée d'un homopolymère, copolymère et/ou polymère séquencé de propylène et en ce que la teneur en élastomère du copolymère séquencé hétérophasique de polypropylène s'élève à 40 à 70 % en poids (par rapport à 100 parts en poids du copolymère séquencé non-réticulé hétérophasique de propylène).

3. Film composite emboutissable selon les revendications 1 et 2, caractérisé en ce que l'élastomère du copolymère d'éthylènepropylène présente une teneur en éthylène de
20 à 70 % en poids, de préférence
30 à 60 % en poids,
et une teneur en propylène de
80 à 30% en poids, de préférence
70 à 40 % en poids,
et possède un poids moléculaire supérieur à 100.000.

4. Film composite emboutissable selon une ou plusieurs des revendications 1 à 3, caractérisé en ce que le polymère séquencé hétérophasique de propylène présente un MFI 230/2,16, exprimé en g/10 min, de
0,3 à 8, de préférence
0,5 à 7.

5. Film composite emboutissable selon une ou plusieurs des revendications 1 à 4, caractérisé en ce que, à titre de PP-EPDM, du PP-EPDM dynamiquement réticulé ou partiellement réticulé avec une densité entre 0,78 à 0,96 g/cm³ est contenu dans le film supérieur et/ou inférieur et/ou en ce que le film inférieur ou les films inférieurs (par rapport à 100 parts en poids de matière synthétique du film inférieur, respectivement des films inférieurs) est constitué, respectivement sont constitués de
d) 5 à 55 % en poids
d'au moins un EPDM partiellement réticulé,
e) 13 à 25 % en poids
d'un homopolymère, copolymère ou polymère greffé de propylène avec ou sans groupes réactionnels,
f) 73 à 19 % en poids
d'au moins un polymère et/ou ionomère contenant des groupes réactionnels, à base d'éthylène et d'acide méthacrylique ou d'acide acrylique, les groupes acides contenant partiellement des ions métalliques ou sont neutralisés par des ions métalliques, et
g) 9 à 1 % en poids
d'au moins un agent de réticulation polymère contenant des groupes réactionnels, agent qui contient plus de 51 % en poids (par rapport à 100 parts en poids de (g)) de groupes d'éthylène ou d'autres groupes oléfiniques et 1 à 49 % en poids de groupes d'acrylate et/ou de méthacrylate et de groupes réactionnels, où sont considérés à titre de groupes réactionnels les groupes d'époxydes, d'isocyanates, de cétones, d'aldéhydes, de silanes, d'halogénures d'alkyle et/ou d'anhydrides.

6. Film composite emboutissable selon une ou plusieurs des revendications 1 à 5, caractérisé en ce que le PP-EPDM pour le film inférieur et/ou supérieur présente un module de flexion (Initial flexural modulus) - mesuré suivant ASTM D 790 avec une bande de film d'une épaisseur de 2 mm - de 80 à 400 MPa, de préférence de 100 à 300 MPa.

7. Film composite emboutissable selon une ou plusieurs des revendications 1 à 6, caractérisé en ce que l'agent de réticulation polymère (g) contenant des groupes réactionnels du film inférieur ou des films inférieurs, présente outre des groupes d'acrylate et/ou de méthacrylate, respectivement des groupes d'acide acrylique et/ou d'acide méthacrylique et plus de 51 % en poids de groupes d'éthylène ou d'oléfines, respectivement de groupes (CH₂) ou CH, des groupes époxydes, de préférence des groupes glycidyles.

8. Film composite emboutissable selon une ou plusieurs des revendications 1 à 7, caractérisé en ce que les polymères et/ou ionomères (f), contenant des groupes réactionnels, du film inférieur, contiennent, à titre d'on métallique, des ions alcalins et/ou alcalino-terreux et/ou des ions de zinc.

9. Film composite emboutissable selon une ou plusieurs des revendications 1 à 8, caractérisé en ce que les polymères et/ou ionomères (f), contenant des groupes réactionnels, contiennent des acrylates d'alkyle et/ou des méthacrylates d'alkyle avec 1 à 8 atomes de carbone.

10. Film composite emboutissable selon une ou plusieurs des revendications 1 à 9, caractérisé en ce que le film supérieur présente une épaisseur moyenne de
60 à 500 µm
et en ce que le film inférieur ou les films inférieurs présentent une épaisseur moyenne de
100 à 2500 µm,
l'épaisseur du film inférieur ou des films inférieurs s'élevant à plus de 1,5 fois celle du film supérieur.

11. Film composite emboutissable selon une ou plusieurs des revendications 1 à 10, caractérisé en ce que le film supérieur présente (ou est réglé à) une dureté Shore D qui est inférieure de plus de trois unités de Shore D à la dureté Shore D du (des) film(s) inférieur(s) et/ou en ce que la tension superficielle du film supérieur est réglée à une valeur supérieure à 40 mN/m.

12. Film composite emboutissable selon une ou plusieurs des revendications 1 à 11, caractérisé en ce que la dureté Shore D du film supérieur est réglée, par le choix pondéré des constituants du film supérieur, de préférence les constituants (a), (b) et/ou (c), à l'intérieur des quantités pondérales indiquées des constituants, à une dureté Shore D inférieure à 37, et en ce que la dureté Shore D du (des) film(s) inférieur(s) est réglée, par le choix pondéré des constituants du (des) film(s) inférieur(s), de préférence des constituants (d), (e), (f) et/ou (g), à l'intérieur des quantités pondérales indiquées, à au moins 38 Shore D.

13. Film composite emboutissable selon une ou plusieurs des revendications 1 à 12, caractérisé en ce qu'au-dessus du film supérieur ou sur la surface du film et/ou en dessous du film inférieur est disposée au moins une couche contenant du polyacrylate, du polyméthacrylate et/ou du polyuréthanne, dont l'épaisseur de couche est inférieure à l'épaisseur de couche du film supérieur ou du film inférieur, l'épaisseur de couche du revêtement représentant de préférence moins de 50 % de l'épaisseur de couche du (des) film(s) supérieur ou inférieur(s).

14. Film composite emboutissable selon une ou plusieurs des revendications 1 à 13, caractérisé en ce que le film supérieur et éventuellement des régions partielles du (des) film(s) inférieur(s) sont estampés ou grainés et munis d'une couche ou d'un revêtement contenant du polyacrylate, du polyméthacrylate et/ou du polyuréthanne, qui contient 0,01 à 18 % en poids d'au moins un agent délustrant à fines particules et qui est revêtu(e) par une application au moyen d'un diluant.

15. Film composite emboutissable selon une ou plusieurs des revendications 1 à 14, caractérisé en ce que la (les) couche(s) ou le (les) revêtement(s) contenant du polyacrylate, du polyméthacrylate et/ou du polyuréthanne ou constitué(es) de ceux-ci (par rapport à la teneur en matière synthétique), disposé(es) en dessous du (des) film(s) inférieur(s), contient, respectivement contiennent, au moins un agent antistatique et/ou au moins un agent chimique d'adhérence, de préférence du carbone à très fines particules ou de la suie avec une granulométrie moyenne inférieure à 100 nm et/ou au moins un acide silicique à très fines particules ou un dioxyde de silicium à très fines particules et/ou un silicate à très fines particules avec une granulométrie moyenne inférieure à 4 µm.

16. Procédé de production du film composite emboutissable selon une ou plusieurs des revendications 1 à 15, au cours duquel on utilise, pour la production du film en matière synthétique, deux ou plusieurs extrudeuses qui sont munies d'une filière plate, caractérisé en ce qu'on extrude dans au moins une extrudeuse les constituants (a) à (c) du film supérieur et dans au moins une extrudeuse supplémentaire les constituants (d) à (g) du film inférieur ou des films inférieurs, à des températures de 150 à 280 °C et en ce que deux ou plusieurs constituants du film inférieur entrent partiellement en réaction ou en réaction de couplage à la température d'extrusion, en utilisant une extrudeuse à double vis, et en ce que le film composite est produit sous forme de film de coextrusion.

17. Procédé selon la revendication 16, caractérisé en ce que la dureté Shore D du film supérieur est réglée, en utilisant et/ou en utilisant conjointement au moins une matière synthétique contenant des polyoléfines ou contenant des groupes polyoléfiniques avec une dureté Shore D (mesurée suivant DIN 53505) inférieure, de même qu'éventuellement en utilisant au moins une matière synthétique contenant des polyoléfines ou contenant des groupes polyoléfiniques avec une dureté Shore D supérieure, à une dureté Shore D qui est inférieure de plus de trois unités de Shore D, de préférence de 5 à 10 unités de Shore D, à la valeur Shore D du film inférieur disposé en dessous.

18. Procédé selon les revendications 16 et 17, caractérisé en ce que la dureté du film supérieur est réglée, par le choix pondéré des constituants du film supérieur, de préférence des constituants (a), (b) et/ou (c), à l'intérieur des quantités pondérales indiquées des constituants, à une dureté inférieure à 37 Shore D, de préférence de 28 à 35 Shore D (mesurée suivant DIN 53505), et en ce que la dureté du (des) film(s) inférieur(s) est réglée, par le choix pondéré des constituants du (des) film(s) inférieur(s), de préférence des constituants (d), (e), (f) et/ou (g), à au moins 38 Shore D, de préférence 39 à 46 Shore D.

19. Procédé selon une ou plusieurs des revendications 16 à 18, caractérisé en ce que le film supérieur (sur sa surface opposée au film inférieur) et/ou le film inférieur (sur sa surface opposée au film supérieur) sont munis d'au moins un revêtement contenant une couche contenant du polyacrylate, du polyméthacrylate et/ou du polyuréthanne et un diluant, de préférence un solvant organique, en utilisant un procédé d'application d'un agent de revêtement, de préférence en utilisant un procédé d'application par pulvérisation, par aspersion, par enduction, au rouleau ou au rouleau de calandre, le revêtement du film supérieur contenant 0,01 à 18 % en poids, de préférence 0,1 à 12 % en poids, d'au moins un agent délustrant à fines particules.

20. Procédé selon une ou plusieurs des revendications 16 à 19, caractérisé en ce qu'on utilise, pour la couche ou le revêtement disposé(e) en dessous du film inférieur, au moins un agent antistatique et/ou au moins un agent chimique d'adhérence, de préférence du carbone à très fines particules ou de la suie avec une granulométrie moyenne inférieure à 100 nm, de préférence entre 10 à 80 nm, et/ou au moins un acide silicique à très fines particules ou un dioxyde de silicium à très fines particules et/ou un silicate avec une granulométrie moyenne inférieure à 4 µm, de préférence inférieure à 3 µm.

21. Utilisation du film composite selon une ou plusieurs des revendications 1 à 16, seul ou en combinaison avec une couche de mousse, une couche de support ou un support, une couche de soutien, une couche d'espacement ou une couche de grillage ou de tissus pour la production de garnitures intérieures de véhicules automobiles, de préférence pour des tableaux de commande ou des tableaux de bord pour véhicules automobiles, de parois latérales pour véhicules automobiles, de garnitures de portières pour véhicules automobiles, d'habillages de plafond pour véhicules automobiles, de parois arrières intérieures pour véhicules automobiles (plage arrière) et d'autres pièces d'habillage d'intérieur ou d'objets pour véhicules automobiles.
